(19) Europäisches Patentamt
European Patent Office
Office européen des brevets

(11) **EP 4 261 933 A1**

(12) **EUROPEAN PATENT APPLICATION**
published in accordance with Art. 153(4) EPC

(43) Date of publication:
**18.10.2023 Bulletin 2023/42**

(21) Application number: **22746269.4**

(22) Date of filing: **27.01.2022**

(51) International Patent Classification (IPC):
*H01M 4/133* $^{(2010.01)}$       *H01M 4/131* $^{(2010.01)}$
*H01M 4/36* $^{(2006.01)}$       *H01M 4/587* $^{(2010.01)}$
*H01M 4/48* $^{(2010.01)}$       *H01M 10/052* $^{(2010.01)}$

(52) Cooperative Patent Classification (CPC):
**H01M 4/131; H01M 4/133; H01M 4/36; H01M 4/48;
H01M 4/587; H01M 10/052**

(86) International application number:
**PCT/KR2022/001531**

(87) International publication number:
**WO 2022/164243 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2021 KR 20210013018**

(71) Applicant: **LG Energy Solution, Ltd.
Seoul 07335 (KR)**

(72) Inventors:
• **KIM, Young Jae
  Daejeon 34122 (KR)**
• **CHAE, Jong Hyun
  Daejeon 34122 (KR)**
• **JUN, Chan Soo
  Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE AND SECONDARY BATTERY COMPRISING SAME**

(57)     The present invention relates to a negative electrode including a negative electrode current collector, and a negative electrode active material layer disposed on the negative electrode current collector, wherein the negative electrode active material layer includes a negative electrode active material containing a silicon-based active material and a carbon-based active material at a weight ratio of 12:88 to 28:72, and a ratio of $D_{50}$ of the carbon-based active material to $D_{90}$ of the silicon-based active material is 2 to 5.

EP 4 261 933 A1

**Description**

**TECHNICAL FIELD**

**Cross-reference to Related Applications**

This application claims the benefit of Korean Patent Application No. 10-2021-0013018, filed on January 29, 2021, in the Korean Intellectual Property Office, the disclosure of which is incorporated herein in its entirety by reference.

**Technical Field**

The present invention relates to a negative electrode and a secondary battery including the same.

**BACKGROUND ART**

Recently, the demand for a small and lightweight secondary battery having a relatively high capacity is rapidly increased due to the rapid spread of electronic devices using batteries, such as cell phones, notebook computers, electric vehicles, and the like. Particularly, a lithium secondary battery is lightweight and has a high energy density, and thus, is attracting attention as a driving power source for portable devices. Therefore, research and development efforts for improving the performance of a lithium secondary battery have been actively conducted.

Typically, a lithium secondary battery includes a positive electrode, a negative electrode, a separator interposed between the positive electrode and the negative electrode, an electrolyte, an organic solvent, and the like. In addition, a positive electrode and a negative electrode may have an active material layer including a positive electrode active material or a negative electrode active material on a current collector. In the positive electrode, a lithiumcontaining metal oxide such as $LiCoO_2$, and $LiMn_2O_4$ is used as a positive electrode active material, and accordingly, in the negative electrode, a carbon-based active material or a silicon-based active material not containing lithium is used as a negative electrode active material.

Among negative electrode active materials, a silicon-based active material has been attracted attention in that it has a capacity of about 10 times higher than that of a carbon-based active material, and has excellent high-speed charging properties. However, a silicon-based active material has a large degree of volume expansion/contraction according to charging and discharging, and as charging and discharging are repeated, an electrical short circuit between active materials is likely to occur, so that there is a problem in that the lifespan properties of a negative electrode are degraded. If a binder is used in a large amount in order to suppress the above, it is difficult to implement a desired high-capacity electrode, and resistance increases, so that it is not used universally.

Korean Patent Registration No. 10-0794192 relates to a method for manufacturing a carbon-coated silicon-graphite composite negative electrode material for a lithium secondary battery and a method for manufacturing a secondary battery including the carbon-coated silicon-graphite composite negative electrode material, but has a limit in solving the above-mentioned problems.

[Prior Art Document]

[Patent Document]

Korean Patent Registration No. 10-0794192

**DISCLOSURE OF THE INVENTION**

**TECHNICAL PROBLEM**

An aspect of the present invention provides a negative electrode and a secondary battery which have improved capacity properties, lifespan properties, and energy density.

**TECHNICAL SOLUTION**

According to an aspect of the present invention, there is provided a negative electrode including a negative electrode current collector, and a negative electrode active material layer disposed on the negative electrode current collector, wherein the negative electrode active material layer includes a negative electrode active material containing a silicon-based active material and a carbon-based active material at a weight ratio of 12:88 to 28:72, and a ratio of $D_{50}$

of the carbon-based active material to $D_{90}$ of the silicon-based active material is 2 to 5.

According to another aspect of the present invention, there is provided a secondary battery including the negative electrode described above, a positive electrode opposing the negative electrode, a separator interposed between the negative electrode and the positive electrode, and an electrolyte.

## ADVANTAGEOUS EFFECTS

A negative electrode of the present invention is characterized by including a negative electrode active material, wherein the negative electrode active material included in the negative electrode contains a silicon-based active material and a carbon-based active material in a specific weight ratio range, and the ratio of the $D_{50}$ of the carbon-based active material to the $D_{90}$ of the silicon-based active material is adjusted to be in a specific range. In general, a silicon-based active material has a larger degree of volume expansion than a carbon-based active material does during charging and discharging, and accordingly, an electrical short circuit is intensified according to the charging and discharging, so that there is a problem in that the lifespan properties are deteriorated. However, according to the negative electrode of the present invention, since the $D_{90}$ of the silicon-based active material and the $D_{50}$ of the carbon-based active material are adjusted to specific ratios, and the weight ratio thereof is adjusted to be in a specific range, so that even if the silicon-based active material expands in volume during charging and discharging, the conductive network may be continuously maintained at an excellent level by the adjacent carbon-based active material, thereby improve lifespan properties by preventing an electrical short circuit between active materials, so that it is possible to preferably implement the excellent capacity properties of a silicon-based active material, and implement a negative electrode and a secondary battery which have high energy density.

## MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular exemplary embodiments only and is not intended to be limiting of the present invention. The terms of a singular form may include plural forms unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In the present specification, $D_{10}$, $D_{50}$, and $D_{90}$ may be defined as a particle diameter respectively corresponding to 10%, 50%, and 90% of the volume accumulation in a particle diameter distribution curve of a particle. The $D_{10}$, $D_{50}$, and $D_{90}$ may be measured by, for example, a laser diffraction method. The laser diffraction method generally enables measurement of a particle diameter from a sub-micron region to several millimeters, so that results of high reproducibility and high resolution may be obtained.

### <Negative electrode>

The present invention relates to a negative electrode, and more specifically, to a negative electrode for a lithium secondary battery.

Specifically, the negative electrode of the present invention includes a negative electrode current collector, and a negative electrode active material layer disposed on the negative electrode current collector, wherein the negative electrode active material layer includes a negative electrode active material containing a silicon-based active material and a carbon-based active material at a weight ratio of 12:88 to 28:72, and a ratio of $D_{50}$ of the carbon-based active material to $D_{90}$ of the silicon-based active material is 2 to 5.

Typically, a silicon-based active material has an advantage of having a high capacity and fast charging properties, but the silicon-based active material has a large degree of volume expansion/contraction according to charging and discharging, so that there are problems in that active materials in a negative electrode are disconnected from each other as charging and discharging continue, and accordingly, lithium transfer between the active materials becomes difficult, and lithium is precipitated, so that there is a problem in that the lifespan properties are rapidly reduced.

In order to solve the above problem, the negative electrode of the present invention is characterized by including a negative electrode active material, wherein the negative electrode active material included in the negative electrode contains a silicon-based active material and a carbon-based active material in a specific weight ratio range, and a ratio

of $D_{50}$ of the carbon-based active material to $D_{90}$ of the silicon-based active material is adjusted to be in a specific range. In the present invention, the ratio of the $D_{50}$ of the carbon-based active material to the $D_{90}$ of the silicon-based active material is specifically specified in consideration of the degree of volume expansion of the silicon-based active material described above, and even if the silicon-based active material included in the negative electrode expands and contracts in volume due to charging and discharging, the conductive network may be continuously maintained by the adjacent carbon-based active material, so that the problem of an electrical short circuit of the silicon-based active material, and the degradation in lifespan performance as a result thereof may be resolved at a significant level. In addition, the negative electrode active material includes the silicon-based active material and the carbon-based active material in a specific weight ratio, so that it is possible to implement a negative electrode and a secondary battery which may maintain a conductive network, and have a high capacity and energy density.

The negative electrode current collector may include at least one selected from the group consisting of copper, stainless steel, aluminum, nickel, titanium, fired carbon, and an aluminum-cadmium alloy, and preferably, may include copper.

The thickness of the negative electrode current collector may typically be 3 um to 500 um, preferably 5 um to 30 $\mu$m.

The negative electrode current collector may have microscopic irregularities formed on the surface thereof to improve the adhesion of the negative electrode active material. For example, the negative electrode current collector may be used in various forms such as a film, a sheet, a foil, a net, a porous body, a foam, and a non-woven body.

The negative electrode active material layer is disposed on the negative electrode current collector. Specifically, the negative electrode active material layer may be disposed on at least one surface of the negative electrode current collector, and specifically, may be disposed on one surface or both surfaces of the negative electrode current collector.

The negative electrode active material layer includes a negative electrode active material.

The negative electrode active material includes a silicon-based active material and a carbon-based active material. The silicon-based active material and the carbon-based active material are included in the negative electrode active material at a weight ratio of 12:88 to 28:72.

When the negative electrode active material includes the silicon-based active material in an amount of less than 12 wt% and the carbon-based active material in an amount of greater than 88 wt% based on the total weight of the silicon-based active material and the carbon-based active material, there are problems in that the excellent capacity properties of the silicon-based active material may not be exerted, fast charging performance may be degraded as the ratio of the carbon-based active material increases, so that there is a risk of lithium precipitation, and lifespan properties may be degraded. When the negative electrode active material includes the silicon-based active material in an amount of greater than 28 wt% and the carbon-based active material in an amount of less than 72 wt% based on the total weight of the silicon-based active material and the carbon-based active material, the amount of the carbon-based active material adjacent to the silicon-based active material is reduced, so that when the silicon-based active material expands or contracts in volume, there may be a problem in that lifespan properties are rapidly degraded since it is difficult to maintain the conductive network by the carbon-based active material.

Preferably, the negative electrode active material may include the silicon-based active material and the carbon-based active material at a weight ratio of 15:85 to 22:78, and when in the above range, it is possible to maintain a conductive network at an excellent level despite the volume expansion and contraction of the silicon-based active material, and it is possible to implement a negative electrode having excellent lifespan properties, capacity properties, and energy density.

The ratio of the $D_{50}$ of the carbon-based active material to the $D_{90}$ of the silicon-based active material is 2 to 5. In the present invention, the ratio of the $D_{50}$ of the carbon-based active material to the $D_{90}$ of the silicon-based active material is specifically adjusted in consideration of the degree of volume expansion of the silicon-based active material described above, and even if the silicon-based active material included in the negative electrode expands and contracts in volume due to charging and discharging, the conductive network may be continuously maintained by the adjacent carbon-based active material, so that the problem of an electrical short circuit of the silicon-based active material, and the degradation in lifespan performance as a result thereof may be resolved at a significant level.

If the ratio of the $D_{50}$ of the carbon-based active material to the $D_{90}$ of the silicon-based active material is less than 2, since it is difficult for the effect of maintaining a conductive network by the carbon-based active material to be exerted with respect to the overall particle size distribution of the silicon-based active material, there may be a problem in that lifespan properties are rapidly degraded. In addition, if the ratio of the $D_{50}$ of the carbon-based active material to the $D_{90}$ of the silicon-based active material is greater than 5, the size of the carbon-based active material becomes excessively larger than that of the silicon-based active material, thereby increasing the size of pores formed by carbon-based active materials in a negative electrode, which may cause a conductive network to be disconnected by silicon-based active materials isolated between the pores formed by the carbon-based active materials in the negative electrode, so that lifespan properties may be degraded.

Preferably, the ratio of the $D_{50}$ of the carbon-based active material to the $D_{90}$ of the silicon-based active material may be 2.7 to 4.5, preferably 3.3 to 3.8, and when in the above range, even if the silicon-based active material expands and contracts in volume, it is possible to maintain a conductive network smoothly, so that lifespan properties may be further improved.

The silicon-based active material may include a compound represented by Formula 1 below.

$$[\text{Formula 1}] \qquad SiO_x$$

In Formula 1 above, $0 \leq x < 2$. Since $SiO_2$ does not react with lithium ions, thereby not being able to store lithium, it is preferable that x is in the above range.

Specifically, the silicon-based active material may include Si. Typically, Si is advantageous in that the capacity thereof is about 2.5 to 3 times higher than that of a silicon oxide (e.g., $SiO_x$ (0<x<2)). However, the volume expansion/contraction according to the charging and discharging of Si is much larger than that of a silicon oxide, so that it is not easy to commercialize Si. However, in the case of the negative electrode of the present invention, even if a silicon-based active material containing Si is used, it is possible to maintain a conductive network smoothly, so that the capacity properties, fast charging properties, and energy density of the negative electrode may be further improved. Specifically, the silicon-based active material may be mostly composed of Si, and more specifically, the silicon-based active material may be composed of Si.

$D_{90}$ of the silicon-based active material may be 3 um to 10 um, preferably 5 um to 8 um, and when in the above range, it is preferable in terms of structural stability of an active material during charging and discharging, and smooth formation and maintenance of a conductive network, and it is preferable in terms of being able to suitably control an SEI film formation reaction caused by the volume expansion and contraction of the silicon-based active material, thereby reducing gas generation cause by a side reaction.

In terms of ensuring the structural stability of the active material during discharging, more smoothly forming a conductive network to maintain electrical conductivity, or making it easier to access the binder for binding the active material and the current collector, $D_{50}$ of the silicon-based active material may be 1 um to 5 um, preferably 1.5 um to 4.5 $\mu$m.

$(D_{90}-D_{10})/D_{50}$ of the silicon-based active material may be 5 or less, specifically 0.5 to 3, and when in the above range, the particle size distribution of the silicon-based active material has a preferred uniformity, so that even if the silicon-based active material expands and contracts in volume during charging and discharging, the effect of maintaining a conductive network may be further improved.

In terms of minimizing the influence of the volume expansion/contraction of the silicon-based active material on a battery as well as sufficiently implementing the high capacity of the silicon-based active material in a secondary battery, the silicon-based active material may be included in the negative electrode active material layer in an amount of 7 wt% to 22 wt%, preferably 12 wt% to 18 wt%.

The carbon-based active material may include at least one selected from the group consisting of artificial graphite, natural graphite, hard carbon, soft carbon, carbon black, graphene, and fibrous carbon, and preferably, may include at least one of artificial graphite and natural graphite.

In terms of exerting the effect of maintaining and covering of the conductive network of the silicon-based active material described above at an excellent level, and improving energy density by allowing the silicon-based active material and the carbon-based active material to be packed well, the $D_{50}$ of the carbon-based active material may be 15 um to 27 um, preferably 18 um to 25 $\mu$m, more preferably 22 um to 25 $\mu$m.

In terms of preventing an electrode non-uniformity problem due to an excessive increase in the particle size distribution of the carbon-based active material, and a current collector tearing phenomenon due to an increase in the ratio of large particles, and allowing a uniform conductive network to be formed and maintained in a negative electrode, the $D_{90}$ of the carbon-based active material may be 20 um to 50 um, preferably 32 um to 46 $\mu$m, more preferably 38 um to 45 $\mu$m.

The $(D_{90}-D_{10})/D_{50}$ of the carbon-based active material may be 5 or less, specifically 0.5 to 3, and when in the above range, the particle size distribution of the carbon-based active material has a preferred uniformity, so that even if the silicon-based active material expands and contracts in volume during charging and discharging, the effect of maintaining a conductive network may be further improved.

In terms of allowing the effect of maintaining a conductive network and the capacity of the silicon-based active material to be implemented at an excellent level, the carbon-based active material may be included in the negative electrode active material layer in an amount of 58 wt% to 73 wt%, preferably 58 wt% to 71 wt%, more preferably 62 wt% to 68 wt%.

The negative electrode active material may be included in the negative electrode active material layer in an amount of 70 wt% to 90 wt%, preferably 75 wt% to 85 wt%.

The negative electrode active material layer may further include a conductive material and a binder, together with the negative electrode active material.

The conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; conductive fiber such as carbon fiber and metal fiber; a conductive tube such as a carbon nanotube; fluorocarbon; metal powder such as aluminum powder, and nickel powder; a conductive whisker such as zinc oxide and potassium titanate; a conductive metal oxide such as titanium oxide; a conductive material such as a polyphenylene derivative, and the like may be used, and preferably, the conductive material may include carbon black in terms of being able to improve conductivity by being positioned between active materials in a negative electrode active material layer, and improve roll-pressing uniformity by being present between a silicon-based active material having high rigidity and a carbon-based active material having low rigidity, thereby suitably relieve stress generated during a roll-pressing process when manufacturing a negative electrode.

The conductive material may be included in the negative electrode active material layer in an amount of 5 wt% to 15 wt%, preferably 7.5 wt% to 12.5 wt%.

The binder may include at least one selected from the group consisting of styrene butadiene rubber (SBR), acrylonitrile butadiene rubber, acrylic rubber, butyl rubber, fluoro rubber, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), polyacryl amide (PAM), a polyvinylidenefluoride-hexafluoropropylene copolymer (PVDF-co-HFP), polyvinylidenefluoride (PVDF), polymethylmethacrylate, polyvinylpyrrolidone, polytetrafluoroethylene, polyethylene, and an ethylene-propylene-diene monomer (EPDM), and preferably, may include polyvinylidenefluoride in terms of improving chemical resistance and adhesion.

The binder may be included in the negative electrode active material layer in an amount of 5 wt% to 15 wt%, preferably 7.5 wt% to 12.5 wt%.

The thickness of the negative electrode active material layer may be 10 um to 100 um, preferably 20 um to 60 $\mu$m.

The negative electrode may be manufactured by coating a negative electrode slurry including a negative electrode active material, and selectively, a binder, a conductive material, and a solvent for forming a negative electrode slurry on the negative electrode current collector, followed by drying and roll-pressing.

The solvent for forming a negative electrode slurry may include, for example, at least one selected from the group consisting of distilled water, ethanol, methanol, and isopropyl alcohol, preferably distilled water, in terms of facilitating the dispersion of the negative active material, the negative binder, and/or the negative electrode material.

### <Secondary battery>

The present invention provide a secondary battery, specifically a lithium secondary battery. Specifically, the secondary battery may include the above-described negative electrode.

Specifically, the secondary battery may include a negative electrode, a positive electrode opposing the negative electrode, a separator interposed between the negative electrode and the positive electrode, and an electrolyte. The negative electrode may be the above-described negative electrode.

The positive electrode may include a positive electrode current collector, and a positive electrode active material layer formed on the positive electrode current collector.

The positive electrode current collector is not particularly limited as long as it has conductivity without causing a chemical change in the battery. Specifically, copper, stainless steel, aluminum, nickel, titanium, fired carbon, copper or stainless steel that is surface-treated with one of carbon, nickel, titanium, silver, and the like, an aluminum-cadmium alloy, and the like may be used as the positive electrode current collector.

The positive electrode current collector may typically have a thickness of 3 um to 500 $\mu$m.

The positive electrode current collector may have microscopic irregularities formed on the surface thereof to improve the adhesion of the positive electrode active material. For example, the positive electrode current collector may be used in various forms such as a film, a sheet, a foil, a net, a porous body, a foam, and a non-woven body.

The positive electrode active material layer may include a positive electrode active material.

The positive electrode active material is a compound capable of reversible intercalation and de-intercalation of lithium, and specifically, may include a lithium transition metal composite oxide including at least one transition metal selected from the group consisting of nickel, cobalt, manganese, and aluminum, and lithium, preferably a lithium transition metal composite oxide including a transition metal containing nickel, cobalt, or manganese, and lithium.

More specifically, the lithium transition metal composite oxide may be a lithium-manganese-based oxide (e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$, etc.), a lithium-nickel-manganese-based oxide (e.g., $LiNi_{1-Y}Mn_YO_2$ (wherein 0<Y<1), $LiMn_{2-Z}Ni_ZO_4$ (wherein 0 < Z < 2), etc.), a lithium-nickel-cobalt-based oxide (e.g., $LiNi_{1-Y1}Co_{Y1}O_2$ (wherein 0<Y1<1), etc.), a lithium-manganese-cobalt-based oxide (e.g., $LiCo_{1-Y2}Mn_{Y2}O_2$ (wherein 0<Y2<1), $LiMn_{2-Z1}Co_{Z1}O_4$ (wherein 0<Z1<2, etc.), a lithium-nickel-manganese-cobalt-based oxide (e.g., $Li(Ni_pCo_qMn_{r1})O_2$ (wherein 0<p<1, 0<q<1, 0<r1<1, p+q+r1=1) or $Li(Ni_{p1}Co_{q1}Mn_{r2})O_4$ (wherein 0<p1<2, 0<q1<2, 0<r2<2, p1+q1+r2=2, etc.), or a lithium-nickel-cobalt-transition metal (M) oxide (e.g., $Li(Ni_{p2}Co_{q2}Mn_{r3}M_{s2})O_2$ (wherein M is selected from the group consisting of Al, Fe, V, Cr, Ti, Ta, Mg, and Mo, and p2, q2, r3, and s2 are each an atomic fraction of independent elements, and $0<p2<1$, $0<q2<1$, $0<r3<1$, $0<s2<1$, $p2+q2+r3+s2=1$, etc.) and the like, and any one or two or more of these compounds may be included. Among these, in terms of being able to increase the capacity and stability of a battery, the lithium transition metal composite oxide may be $LiCoO_2$, $LiMnO_2$, $LiNiO_2$, a lithium nickel-manganese-cobalt oxide (e.g., $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, etc.), or a lithium-nickel-cobalt-aluminum oxide (e.g., $Li(Ni_{0.8}Co_{0.15}Al_{0.05})O_2$, etc.), and the like. When considering an remarkable improvement effect according to the control of type and content ratio of constituent elements forming a lithium transition metal composite oxide, the lithium transition metal composite oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and the like, and any one thereof or a mixture of two or more thereof may be used.

The positive electrode active material may be included in the positive electrode active material layer in an amount of 80 wt% to 99 wt%, preferably 92 wt% to 98.5 wt% in consideration of exerting sufficient capacity of the positive electrode active material.

The positive electrode active material layer may further include a binder and/or a conductive material in addition to the positive electrode active material described above.

The binder is a component for assisting in binding of an active material, a conductive material, and the like, and binding to a current collector, and specifically, may include at least one selected from the group consisting of polyvinylidenefluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, and fluorine rubber, preferably polyvinylidenefluoride.

The binder may be included in the positive electrode active material layer in an amount of 1 wt% to 20 wt%, preferably 1.2 wt% to 10 wt% in terms of securing sufficient binding force between components such as a positive electrode active material.

The conductive material may be used to assist and improve conductivity in the secondary battery, and is not particularly limited as long as it has conductivity without causing a chemical change. Specifically, the conductive material may include graphite such as natural graphite or artificial graphite; a carbon-based material such as carbon black, acetylene black, Ketjen black, channel black, furnace black, lamp black, and thermal black; conductive fiber such as carbon fiber and metal fiber; a conductive tube such as a carbon nanotube; fluorocarbon; metal powder such as aluminum powder, and nickel powder; a conductive whisker such as zinc oxide and potassium titanate; a conductive metal oxide such as titanium oxide; and a polyphenylene derivative, and may preferably include carbon black in terms of improving conductivity.

In terms of facilitating the dispersion of the conductive material when preparing a slurry for forming a positive electrode active material layer and further improving electrical conductivity, the specific surface area of the conductive material may be 80 $m^2$/g to 200 $m^2$/g, preferably 100 $m^2$/g to 150 $m^2$/g.

In terms of securing sufficient electrical conductivity, the conductive material may be included in the positive electrode active material layer in an amount of 1 wt% to 20 wt%, preferably 1.2 wt% to 10 wt%.

The thickness of the positive electrode active material layer may be 30 um to 400 um, preferably 50 um to 110 $\mu$m.

The positive electrode may be manufactured by coating a positive electrode slurry including a positive electrode active material, and selectively, a binder, a conductive material, and a solvent for forming a positive electrode slurry on the positive electrode current collector, followed by drying and roll-pressing.

The solvent for forming a positive electrode slurry may include an organic solvent such as N-methyl-2-pyrrolidone (NMP), and may be used in an amount such that a preferred viscosity is achieved when the positive electrode active material, and selectively, the binder, the conductive material, and the like are included. For example, the solvent for forming a positive electrode slurry may be included in the positive electrode slurry in an amount such that the concentration of a solid including the positive electrode active material, and selectively, the binder and the conductive material is 50 wt% to 95 wt%, preferably 70 wt% to 90 wt%.

The separator is to separate the negative electrode and the positive electrode and to provide a movement path for lithium ions. Any separator may be used without particular limitation as long as it is a separator commonly used in a secondary battery. Particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may selectively be used in a single-layered or a multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a moltentype inorganic electrolyte, and the like, all of which may be used in the manufacturing of a secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among the above solvents, a carbonate-based solvent is preferable, and a mixture of a cyclic carbonate (e.g., ethylene carbonate or propylene carbonate) having a high ionic conductivity and a high dielectric constant, which may increase charging/discharging performance of the battery, and a lowviscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

Any compound may be used as the lithium salt without particular limitation as long as it may provide lithium ions used in a lithium secondary battery. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

In a secondary battery of the present invention, the N/P ratio calculated by Equation 1 below may be 1.5 to 3, preferably 1.5 to 2.0.

**[0082]** [Equation 1]

$$\text{N/P ratio} = \{(\text{Discharge capacity per unit area of the negative electrode}) / (\text{Discharge capacity per unit area of the positive electrode})\}$$

When in the above range, the high capacity and fast charging properties of a silicon-based active material may be exhibited, and also, the influence of volume expansion/contraction of the silicon-based active material on the battery may be minimized, so that the lifespan properties of the secondary battery may be further improved.

According to a typical method for manufacturing a secondary battery, the secondary battery may be manufactured by interposing a separator between the negative electrode and the positive electrode described above, and then injecting an electrolyte solution thereto.

The secondary battery according to the present invention is useful for portable devices such as a mobile phone, a notebook computer, and a digital camera, and in the field of electric vehicles such as a hybrid electric vehicle (HEV), and in particular, may be preferably used as a component battery for a medium-to-large-sized battery module. Therefore, the present invention also provides a medium-to-large-sized battery module including the secondary battery as described above as a unit cell.

A medium-to-large-sized battery module as described above may be preferably applied to a power source of devices which requires high output and large capacity, such as an electric vehicle, a hybrid electric vehicle, and a power storage device.

Hereinafter, embodiments of the present invention will be described in detail so that those skilled in the art may easily carry out the present invention. However, the present invention may be embodied in many different forms, and is not limited to the embodiments set forth herein.

## Examples

<Manufacturing of negative electrode>

Example 1: Manufacturing negative electrode

As a negative electrode active material, a mixture in which a silicon-based active material and a carbon-based active material were mixed at a weight ratio of 18.8:81.2 was prepared. As the silicon-based active material, Si, whose $D_{10}$, $D_{50}$, and $D_{90}$ are respectively 0.7 um, 2.3 um, and 6.5 $\mu$m, was prepared. As the carbon-based active material, artificial graphite, whose $D_{10}$, $D_{50}$, and $D_{90}$ are respectively 10.3 um, 20.0 um, and 35.2 $\mu$m, was prepared.

The negative electrode active material prepared above, carbon black (Product name: Super C65, Manufacturer: Timcal) as a conductive material, and PVdF as a binder were mixed at a weight ratio of 80:10:10, and then added to distilled water, as a solvent for forming a negative electrode slurry, to prepare a negative electrode slurry.

The negative electrode slurry was coated on both sides of a copper current collector (Thickness: 8 um) as a negative electrode current collector with a loading amount of 100 mg/25 cm$^2$, roll-pressed, and then dried in a vacuum oven at 130°C for 10 hours to form a negative electrode active material layer (Thickness: 25 $\mu$m), which was used as a negative electrode (Thickness of the negative electrode: 58 pm).

Example 2 to Example 6, and Comparative Example 1 to Comparative Example 7: Manufacturing of negative electrode

Negative electrodes of Example 2 to Example 6, and Comparative Example 1 to Comparative Example 7 were manufactured in the same manner as in Example 1 except that the silicon-based active material and the carbon-based active material of Table 1 below were used.

[Table 1]

| | Negative electrode active material | | | | | | | | | | Conductive material | Binder | Negative electrode design capacity (mAh/cm$^2$) |
|---|---|---|---|---|---|---|---|---|---|---|---|---|---|
| | Silicon-based active material | | | | Carbon-based active material | | | | Weight ratio of Si:Graphite | Graphite $D_{50}$/Si $D_{90}$ | wt% in negative electrode | wt% in negative electrode | |
| | $D_{10}$ ($\mu$m) | $D_{50}$ ($\mu$m) | $D_{90}$ ($\mu$m) | wt% in negative electrode | $D_{10}$ ($\mu$m) | $D_{50}$ ($\mu$m) | $D_{90}$ ($\mu$m) | wt% in negative electrode | | | | | |
| Example 1 | 0 7 | 2 3 | 6 5 | 15 | 1 0 3 | 2 0 | 3 5 2 | 65 | 18.8 : 81.2 | About 3.1 | 10 | 10 | 5.4 |
| Example 2 | 0 7 | 2 3 | 6 5 | 15 | 8 4 | 1 6 | 2 9 . 0 | 65 | 18.8 : 81.2 | About 2.5 | 10 | 10 | 5.4 |
| Example 3 | 0 7 | 2 3 | 6 5 | 15 | 1 2 4 | 2 4 .. | 4 4 | 65 | 18.8 : 81. 2 | About 3.7 | | | |
| Example 4 | 0 7 | 2 3 | 6 5 | 10 | 1 0 3 | 2 0 | 3 5 2 | 70 | 12.5 : 87. 5 | About 3.1 | 10 | 10 | 4.9 |
| Example 5 | 0 7 | 2 3 | 6 5 | 20 | 1 0 3 | 2 0 | 3 5 2 | 60 | 25.0 : 75. 0 | About 3.1 | 10 | 10 | 5.9 |

(continued)

| | Negative electrode active material | | | | | | | | | | Conductive material | Binder | Negative electrode design capacity (mAh/cm²) |
|---|---|---|---|---|---|---|---|---|---|---|---|---|---|
| | Silicon-based active material | | | | Carbon-based active material | | | | Weight ratio of Si:Graphite | Graphite $D_{50}$/Si $D_{90}$ | wt% in negative electrode | wt% in negative electrode | |
| | $D_{10}$ (μm) | $D_{50}$ (μm) | $D_{90}$ (μm) | wt% in negative electrode | $D_{10}$ (μm) | $D_{50}$ (μm) | $D_{90}$ (μm) | wt% in negative electrode | | | | | |
| Example 6 | 0.7 | 2.3 | 6.5 | 15 | 14.5 | 26.5 | 47.5 | 65 | 18.8 : 71.2 | About 4.1 | 10 | 10 | 5.4 |
| Comparative Example 1 | 0.7 | 2.3 | 6.5 | 80 | - | - | - | 0 | 100 : 0 | - | 10 | 10 | 11.5 |
| Comparative Example 2 | 0.7 | 2.3 | 6.5 | 5 | 10.3 | 20 | 35.2 | 75 | 6.3 : 93.7 | About 3.1 | 10 | 10 | 3.9 |
| Comparative Example 3 | 0.7 | 2.3 | 6.5 | 25 | 10.3 | 20 | 35.2 | 55 | 31.3 : 68.7 | About 3.1 | 10 | 10 | 6.9 |
| Comparative Example 4 | 0.7 | 2.3 | 6.5 | 15 | 6.1 | 10 | 14.6 | 65 | 18.8 : 81.2 | About 1.5 | 10 | 10 | 5.4 |
| Comparative Example 5 | 0.2 | 1.2 | 2.9 | 15 | 10.3 | 20 | 35.2 | 65 | 18.8 : 81.2 | About 6.9 | 10 | 10 | 5.3 |
| Comparative Example 6 | 0.7 | 2.3 | 6.5 | 8 | 10.3 | 20 | 35.2 | 72 | 10.0 : 90.0 | About 3.1 | 10 | 10 | 4.3 |

(continued)

| | Negative electrode active material | | | | | | | | | | Cond uctive mate rial | Bin der | Negative ele ctr ode des ign cap aci ty (mA h/c m²) |
|---|---|---|---|---|---|---|---|---|---|---|---|---|---|
| | Silicon-based active material | | | | Carbon-based active material | | | | Weight rati o of Si: G raph ite | Gra phi te $D_{50}$ /Si $D_{90}$ | wt% in nega tive elec trod e | wt% in neg ati ve ele ctr ode | |
| | $D_{10}$ (μ m) | $D_{50}$ (μ m) | $D_{90}$ (μ m) | wt% in neg ati ve ele ctr ode | $D_{10}$ (μ m) | $D_{50}$ (μ m) | $D_{90}$ (μ m) | wt% in neg ati ve ele ctr ode | | | | | |
| Comp arat ive Exam ple 7 | 0 7 | 2 3 | 6 5 | 24 | 1 0 3 | 2 0 | 3 5 2 | 56 | 30.0 : 7 0 . 0 | Abo ut 3.1 | 10 | 10 | 6.7 |

<Manufacturing of secondary battery>

Li[Ni$_{0.6}$Co$_{0.2}$Mn$_{0.2}$]O$_2$ (Average particle diameter $D_{50}$: 15 um) as a positive electrode active material, carbon black (Product name: Super C65, Manufacturer: Timcal) as a conductive material, and polyvinylidenefluoride (PVdF) as a binder were added at a weight ratio of 97.5:1.0:1.5 to N-methyl-2-pyrrolidone (NMP), as a solvent for forming a positive electrode slurry, to prepare a positive electrode slurry.

The positive electrode slurry was coated on both sides of an aluminum current collector (Thickness: 15 um) as a positive electrode current collector with a loading amount of 600 mg/25 cm², roll-pressed, and then dried in a vacuum oven at 130°C for 10 hours to form a positive electrode active material layer (Thickness: 73.5 um), thereby manufacturing a positive electrode (Thickness of the positive electrode: 162 μm).

A polyethylene separator was interposed between the positive electrode and the negative electrode of Example 1, and an electrolyte was injected thereto to manufacture a secondary battery of Example 1.

The electrolyte was prepared by adding vinylene carbonate in an amount of 3 wt% based on the total weight of the electrolyte, and then adding LiPF$_6$, as a lithium salt, at a concentration of 1 M, to an organic solvent in which fluoroethylene carbonate (FEC) and diethyl carbonate (DMC) were mixed in a volume ratio of 30:70.

Secondary batteries of Examples 2 to 6 and Comparative Examples 1 to 7 were manufactured in the same manner as in Example 1 except that the negative electrodes of Examples 2 to 6 and Comparative Examples 1 to 7 were respectively used.

**Experimental Examples**

**Experimental Example 1: Cycle capacity retention rate evaluation**

The secondary battery manufactured in each of Examples 1 to 6 and Comparative Examples 1 to 7 was evaluated for capacity retention rate using an electrochemical charge/discharge device.

The secondary battery was charged/discharged until the 100th cycle under the charging (1.0 C CC/CV charge 4.2 V 0.05 C cut) and discharging (0.5 C CC discharge 3.2 V cut) conditions.

The capacity retention rate was evaluated by the following equation. The results are shown in Table 2 below.

$$\text{Capacity retention rate (\%)} = \{(\text{Discharge capacity at } 100^{\text{th}} \text{ cycle})/(\text{Discharge capacity at } 1^{\text{st}} \text{ cycle})\} \times 100$$

[Table 2]

|  | Cycle capacity retention rate(%) @ 100 cycle |
| --- | --- |
| Example 1 | 65.9 |
| Example 2 | 62.4 |
| Example 3 | 67.1 |
| Example 4 | 61.5 |
| Example 5 | 59.8 |
| Example 6 | 63.0 |
| Comparative Example 1 | 22.3 |
| Comparative Example 2 | 52.7 |
| Comparative Example 3 | 48.5 |
| Comparative Example 4 | 28.1 |
| Comparative Example 5 | 42.6 |
| Comparative Example 6 | 56.2 |
| Comparative Example 7 | 50.4 |

Referring to Table 2, it can be confirmed that the negative electrode and the secondary battery of each of Examples 1 to 6 in which the particle diameter and the weight ratio of the silicon-based active material and the carbon-based active material were adjusted to desired levels show excellent lifespan performance compared to those of Comparative Examples.

**Experimental Example 2: Energy density evaluation**

The secondary battery manufactured in each of Examples 1 to 6 and Comparative Examples 1 to 7 was charged and discharged one time under the following conditions, and the discharge capacity (Unit: Wh) of the secondary battery was obtained.

At this time, the thickness of the secondary battery after the charge was measured, and the thickness of the secondary battery obtained above was multiplied by the area of the secondary battery to obtain the volume (Unit: liter (L)) of the secondary battery.

The discharge capacity of the secondary battery obtained above was divided by the volume of the secondary battery to calculate energy density (Unit: Wh/L). The results are shown in Table 3 below.

<Charging and discharging conditions>

Charging: CC/CV charge, 0.33 C, 4.2 V, 5% cut-off
Discharging: CC discharge, 0.33 C, 2.5 V

[Table 3]

|  | Energy density (Wh/L) |
| --- | --- |
| Example 1 | 861 |
| Example 2 | 855 |
| Example 3 | 867 |
| Example 4 | 832 |
| Example 5 | 853 |

(continued)

|  | Energy density (Wh/L) |
|---|---|
| Example 6 | 860 |
| Comparative Example 1 | 761 |
| Comparative Example 2 | 653 |
| Comparative Example 3 | 836 |
| Comparative Example 4 | 821 |
| Comparative Example 5 | 828 |
| Comparative Example 6 | 702 |
| Comparative Example 7 | 840 |

Referring to Table 3, it can be confirmed that the negative electrode and the secondary battery of each of Examples 1 to 6 in which the particle diameter and the weight ratio of the silicon-based active material and the carbon-based active material were adjusted to desired levels show an excellent level of energy density compared to those of Comparative Examples 1, 2, 4, 5, and 6.

Meanwhile, Comparative Examples 3 and 7 show a somewhat high level of energy density, but have very poor lifespan performance as described above, which is not preferable.

**Claims**

1. A negative electrode comprising:

   a negative electrode current collector; and
   a negative electrode active material layer disposed on the negative electrode current collector, wherein:

   the negative electrode active material layer includes a negative electrode active material containing a silicon-based active material and a carbon-based active material at a weight ratio of 12:88 to 28:72; and
   a ratio of $D_{50}$ of the carbon-based active material to $D_{90}$ of the silicon-based active material is 2 to 5.

2. The negative electrode claim 1, wherein the negative electrode active material layer comprises the negative electrode active material in an amount of 70 wt% to 90 wt%.

3. The negative electrode claim 1, wherein $D_{90}$ of the silicon-based active material is 3 um to 10 $\mu$m.

4. The negative electrode claim 1, wherein $D_{50}$ of the silicon-based active material is 1 um to 5 $\mu$m.

5. The negative electrode claim 1, wherein $(D_{90}-D_{10})/D_{50}$ of the silicon-based active material is 5 or less.

6. The negative electrode claim 1, wherein the silicon-based active material comprises a compound represented by Formula 1 below:

   [Formula 1]            $SiO_x$

   wherein in Formula 1 above, $0 \leq x < 2$.

7. The negative electrode claim 1, wherein the silicon-based active material is included in the negative electrode active material layer in an amount of 7 wt% to 22 wt%.

8. The negative electrode claim 1, wherein $D_{50}$ of the carbon-based active material is 15 um to 27 $\mu$m.

9. The negative electrode claim 1, wherein $D_{90}$ of the carbon-based active material is 20 um to 50 $\mu$m.

**10.** The negative electrode claim 1, wherein $(D_{90}-D_{10})/D_{50}$ of the carbon-based active material is 5 or less.

**11.** The negative electrode claim 1, wherein the carbon-based active material comprises at least one selected from the group consisting of artificial graphite, natural graphite, hard carbon, soft carbon, carbon black, graphene, and fibrous carbon.

**12.** The negative electrode claim 1, wherein the carbon-based active material is included in the negative electrode active material layer in an amount of 58 wt% to 73 wt%.

**13.** The negative electrode claim 1, wherein the negative electrode active material layer further comprises a conductive material and a binder.

**14.** A secondary batter comprising:

the negative electrode according to claim 1;
a positive electrode opposing the negative electrode;
a separator interposed between the positive electrode and the negative electrode; and
an electrolyte.

## INTERNATIONAL SEARCH REPORT

| International application No. |
| --- |
| **PCT/KR2022/001531** |

| A. | CLASSIFICATION OF SUBJECT MATTER |
| --- | --- |

**H01M 4/133**(2010.01)i; **H01M 4/131**(2010.01)i; **H01M 4/36**(2006.01)i; **H01M 4/587**(2010.01)i; **H01M 4/48**(2010.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 4/133(2010.01); C01B 32/205(2017.01); C01B 32/21(2017.01); C01B 33/02(2006.01); H01M 10/0525(2010.01); H01M 10/054(2010.01); H01M 4/36(2006.01); H01M 4/38(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(negative electrode), 실리콘계 활물질(silicon-based active material), 탄소계 활물질(carbon-based active material), 입도(grain size), 입경 분포(particle size distribution), D50, D90, D10

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2017-0118044 A (NEXEON LTD.) 24 October 2017 (2017-10-24) See paragraphs [0078], [0083], [0190]-[0192], [0194] and [0199]. | 1-8,11-14 |
| Y | | 9,10 |
| Y | KR 10-2020-0076498 A (POSCO et al.) 29 June 2020 (2020-06-29) See claims 1 and 2; and paragraphs [0047]-[0055]. | 9,10 |
| X | JP 2016-103337 A (HITACHI LTD.) 02 June 2016 (2016-06-02) See claims 1, 4 and 7-8; and paragraphs [0031]-[0034] and [0047]-[0065]. | 1-4,6-8,11-14 |
| A | JP 6703988 B2 (SHOWA DENKO KK et al.) 03 June 2020 (2020-06-03) See entire document. | 1-14 |
| A | US 2019-0386300 A1 (UMICORE) 19 December 2019 (2019-12-19) See entire document. | 1-14 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 May 2022** | **10 May 2022** |

| Name and mailing address of the ISA/KR | Authorized officer |
| --- | --- |
| **Korean Intellectual Property Office Government Complex-Daejeon Building 4, 189 Cheongsaro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2022/001531** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 112018334 A (BEITREI NEW MATERIALS GROUP CO., LTD.) 01 December 2020. <br> See entire document. | 1-14 |

Form PCT/ISA/210 (second sheet) (July 2019)

**INTERNATIONAL SEARCH REPORT**
**Information on patent family members**

International application No.

**PCT/KR2022/001531**

| Patent document cited in search report | | | Publication date (day/month/year) | Patent family member(s) | | | Publication date (day/month/year) |
|---|---|---|---|---|---|---|---|
| KR | 10-2017-0118044 | A | 24 October 2017 | CN | 107223288 | A | 29 September 2017 |
| | | | | EP | 3231027 | B1 | 27 February 2019 |
| | | | | GB | 2533161 | A | 15 June 2016 |
| | | | | JP | 2017-538267 | A | 21 December 2017 |
| | | | | US | 10476072 | B2 | 12 November 2019 |
| | | | | WO | 2016-092335 | A1 | 16 June 2016 |
| KR | 10-2020-0076498 | A | 29 June 2020 | CN | 113226986 | A | 06 August 2021 |
| | | | | EP | 3901088 | A1 | 27 October 2021 |
| | | | | KR | 10-2020-0076504 | A | 29 June 2020 |
| | | | | KR | 10-2176343 | B1 | 09 November 2020 |
| | | | | WO | 2020-130443 | A1 | 25 June 2020 |
| JP | 2016-103337 | A | 02 June 2016 | JP | 06517007 | B2 | 22 May 2019 |
| | | | | KR | 10-2016-0063988 | A | 07 June 2016 |
| | | | | US | 10347908 | B2 | 09 July 2019 |
| JP | 6703988 | B2 | 03 June 2020 | CN | 107710467 | A | 16 February 2018 |
| | | | | EP | 3319154 | A1 | 09 May 2018 |
| | | | | KR | 10-2018-0015251 | A | 12 February 2018 |
| | | | | KR | 10-2132618 | B1 | 13 July 2020 |
| | | | | US | 11031587 | B2 | 08 June 2021 |
| | | | | WO | 2017-002959 | A1 | 05 January 2017 |
| US | 2019-0386300 | A1 | 19 December 2019 | CN | 110611094 | A | 24 December 2019 |
| | | | | EP | 3582303 | A1 | 18 December 2019 |
| | | | | JP | 2020-009754 | A | 16 January 2020 |
| | | | | KR | 10-2318270 | B1 | 27 October 2021 |
| CN | 112018334 | A | 01 December 2020 | EP | 3849001 | A1 | 14 July 2021 |
| | | | | JP | 2021-536102 | A | 23 December 2021 |
| | | | | US | 2021-0384500 | A1 | 09 December 2021 |
| | | | | WO | 2020-238658 | A1 | 03 December 2020 |

Form PCT/ISA/210 (patent family annex) (July 2019)

**EP 4 261 933 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210013018
- KR 100794192